# EUROPÄISCHE PATENTANMELDUNG

(11) **EP 2 128 103 A1**
(43) Veröffentlichungstag der Anmeldung: **02.12.2009**
(21) Anmeldenummer: 08157104.4
(22) Anmeldetag: 28.05.2008
(51) Int. Cl.: C03C 17/30, C03C 27/04, C08G 18/10, C09D 183/08, C09J 175/00, C09J 175/02, C09J 175/04

(54) **Aromatisches Sekundäres Aminosilan enthaltende Haftvermittlerzusammensetzung**

(71) Anmelder: Sika Technology AG, 6340 Baar (CH)
(72) Erfinder: Dohner, Reto, 8005, Zürich (CH); Schlumpf, Michael, 8143, Stallikon (CH); Diener, Andreas, 8636, Wald (CH); Huck, Wolf-Rüdiger, 8044, Zürich (CH)
(74) Vertreter: Sika Patent Attorneys

(57) **Zusammenfassung**

Gegenstand der vorliegenden Erfindung sind Zusammensetzungen, welche i) mindestens ein Mercaptosilan **MS,** sowie ii) mindestens ein Polysilan **PS,** sowie iii) mindestens ein aromatisches sekundäres Aminosilan **AS,** sowie iv) mindestens eine Organo-Titanverbindung aufweisen.

Die Zusammensetzungen eignen sich als Haftvermittler, insbesondere in Form von Primern. Sie weisen gute Haftung auf und sind insbesondere für das Verkleben von Glas und Glaskeramik geeignet.

## Beschreibung

### Technisches Gebiet

Die vorliegende Erfindung betrifft das Gebiet der Haftvermittler.

### Stand der Technik

Kleben ist eine breit eingesetzte Verbindungstechnologie. Aufgrund der grossen Anzahl von möglichen Substraten welche miteinander verklebt werden, gibt es immer wieder Substrate, welche mit gewissen Klebstoffen keine oder ungenügende Haftung aufbauen können. Um die Haftung von Klebstoffen und Dichtstoffen auf diesen Untergründen zu verbessern, wurden schon länger Haftvermittler, insbesondere Primern, eingesetzt.
Als Haftvermittler werden üblicherweise Silane, vielfach auch als Mischungen eingesetzt. WO-A-2005/059056 beschreibt beispielsweise einen Primer, welcher neben einem Organotitanat und einem organischen Lösungsmittel ein Mercaptosilan und ein Polyaminosilan und ein sekundäres Aminosilan umfasst.
Die in WO-A-2005/059056 offenbarten Haftvermittler weisen jedoch häufig Haftprobleme, insbesondere auf Glas und Glaskeramiken und insbesondere nach Cataplasmaklimalagerung, auf.

### Darstellung der Erfindung

Aufgabe der vorliegenden Erfindung ist es daher, Haftvermittler zur Verfügung zu stellen, welche gute Haftungen von einkomponentigen feuchtigkeitshärtenden Polyurethanklebstoffen, insbesondere auf Glas und Glaskeramiken, und insbesondere nach Cataplasmaklimalagerung, aufweisen.
Überraschenderweise wurde nun gefunden, dass die Zusammensetzungen gemäss Anspruch 1 diese Aufgabe lösen können.
Die Zusammensetzungen eignen sich insbesondere als Primer für einkomponentige feuchtigkeitshärtende Polyurethanklebstoffe und werden vorteilhaft für das Verkleben von Glas und Glaskeramik verwendet. Besonders geeignet haben sie sich im Einsatz als Primer zur Verglasung von Transportmitteln, insbesondere von Strassen- und Schienenfahrzeugen, gezeigt.
Weitere vorteilhafte Ausführungsformen der Erfindung sind Gegenstände von weiteren unabhängigen und abhängigen Ansprüchen.

### Wege zur Ausführung der Erfindung

Gegenstand der vorliegenden Erfindung sind Zusammensetzungen, welche i) mindestens ein Mercaptosilan **MS,** sowie ii) mindestens ein Polysilan **PS,** sowie iii) mindestens ein aromatisches sekundäres Aminosilan **AS,** sowie iv) mindestens eine Organo-Titanverbindung aufweisen.

Mit dem Begriff "Organoalkoxysilan", beziehungsweise "Organoacyloxysilan", oder kurz "Silan" werden im vorliegenden Dokument Verbindungen bezeichnet, in denen zum einen mindestens eine, üblicherweise 2 oder 3, Alkoxygruppen, beziehungsweise Acyloxygruppen, direkt an das Silicium-Atom gebunden sind (über eine Si-O-Bindung), und die zum anderen mindestens einen direkt an das Silicium-Atom (über eine Si-C-Bindung) gebundenen organischen Rest aufweisen und keine Si-O-Si-Bindungen aufweisen. Entsprechend dazu bezeichnet der Begriff "Silangruppe" die an den organischen Rest des Organoalkoxysilans, beziehungsweise Organoacyloxysilans, gebundene Silicium-haltige Gruppe. Die Organoalkoxysilane oder Organoacyloxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Silane, welche Amino-, Mercapto- beziehungsweise Oxirangruppen im ans Siliziumatom der Silangruppe gebundenen organischen Rest aufweisen, werden als "Aminosilane", "Mercaptosilane" beziehungsweise "Epoxysilane" bezeichnet. Ein primäres Aminosilan weist eine primäre Aminogruppe -NH₂ auf. Ein sekundäres Aminosilan weist eine sekundäre Aminogruppe -NH- auf. Ein aromatisches sekundäres Aminosilan weist eine aromatische sekundäre Aminogruppe auf. Bei der aromatischen sekundären Aminogruppe ist die sekundäre Aminogruppe direkt an einen aromatischen Rest gebunden, wie dies beispielsweise im N-Methylanilin der Fall ist. Ein tertiäres Aminosilan weist eine tertiäre Aminogruppe 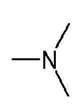 auf.

Mit "Poly" beginnende Substanznamen wie Polysilan, Polyol, Polyisocyanat, Polymercaptan oder Polyamin bezeichnen im vorliegenden Dokument Substanzen, die formal 2 oder mehr der in ihrem Namen vorkommenden funktionellen Gruppen pro Molekül enthalten.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Für die Zusammensetzung geeignete Mercaptosilane **MS** weisen vorzugsweise die Formel (II) auf.

HS-R¹Si(OR²)_{(3-c)}(R³)_{c} (II)

Hierbei steht R² unabhängig voneinander für eine Alkylgruppe mit 1 bis 4 C-Atomen oder eine Acylgruppe mit 1 bis 4 C-Atomen, bevorzugt für Methyl. Weiterhin stehen R³ unabhängig voneinander für H oder für eine Alkylgruppe mit 1 bis 10 C-Atomen und R¹ für eine lineare oder verzweigte Alkylengruppe mit 1 bis 6 C-Atomen, insbesondere für Propylen, und c für einen Wert von 0, 1 oder 2, bevorzugt 0.

Als Mercaptosilane **MS** sind insbesondere geeignet Mercaptosilane welche ausgewählt sind aus der Gruppe bestehend aus Mercaptomethyl-trimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy-(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan und 4-Mercapto-3,3-dimethylbutyltrimethoxysilan.
Als Mercaptosilane **MS** sind 3-Mercaptopropyl-trimethoxysilan und 3-Mercaptopropyl-triethoxysilan, insbesondere 3-Mercaptopropyl-trimethoxysilan, bevorzugt.

Typischerweise enthält die Zusammensetzung mindestens ein Mercaptosilan **MS** mit einem Gewichtsanteil an Mercaptosilan **MS** von 0.5- 10 Gew.-%, insbesondere 1 - 7 Gew.-%, bevorzugt 2 - 5 Gew.-%, bezogen auf das Gewicht der Zusammensetzung.

Als Polysilan **PS** ist in einer ersten Ausführungsform ein Polysilan **PS1** geeignet, welches mindestens eine sekundäre oder tertiäre Aminogruppe aufweist. In einer zweiten Ausführungsform ist ein Polysilan **PS2** geeignet, welches erhältlich ist aus einer Reaktion eines Aminosilans oder Mercaptosilans mit einem Polyisocyanat oder mit einem Isocyanatgruppen aufweisenden Polyurethanpolymer.

Polysilan **PS1** weist mindestens eine sekundäre oder tertiäre Aminogruppe, insbesondere eine sekundäre Aminogruppe auf. Insbesondere geeignet sind Aminosilane der Formel (III).

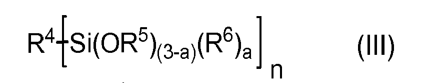

Hierbei steht R⁴ für einen n-wertigen organischen Rest mit mindestens einer sekundären oder tertiären Aminogruppe. R⁵ steht unabhängig voneinander für eine Alkylgruppe mit 1 bis 4 C-Atomen oder eine Acylgruppe mit 1 bis 4 C-Atomen. Der Index a steht für einen Wert von 0, 1 oder 2. Weiterhin steht R⁶ unabhängig voneinander für H oder für eine Alkylgruppe mit 1 bis 10 C-Atomen und n steht für einen Wert von 2, 3 oder 4. Besonders bevorzugt steht n für 2 oder 3, d.h. vorzugsweise weist das Polysilan **PS1** 2 oder 3 Silangruppen auf. Bevorzugt werden Polysilane **PS1** mit 2 Silangruppen. Es werden Polysilane **PS1** mit a = 0 bevorzugt. Als R⁵ werden Methyl-, Ethyl-, Propyl- und Butylgruppen sowie deren Stellungsisomere bevorzugt. Meist bevorzugt ist R⁵ eine Methylgruppe.

Einerseits werden als Polysilane **PS1** Polysilane mit der Formel (IV) bevorzugt.

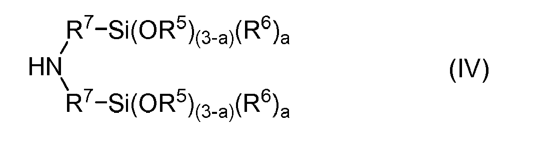

Hierbei steht R⁷ für eine lineare oder verzweigte Alkylengruppe mit 1 bis 6 C-Atomen, insbesondere für eine Propylengruppe.

Als besonders bevorzugte Polysilane **PS1** gelten Bis(3-trimethoxysilylpropyl)amin und Bis(3-triethoxysilylpropyl)amin. Als meist bevorzugtes Polysilan **PS1** gilt Bis(3-trimethoxysilylpropyl)amin.

Andererseits bevorzugte Polysilane **PS1** sind Polysilane, welche mindestens ein Strukturelement der Formel (V) oder (VI), insbesondere der Formel (V-1) oder (VI-1), aufweisen.

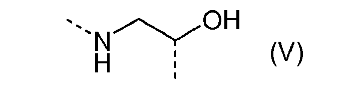

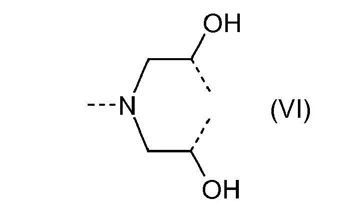

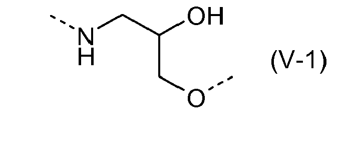

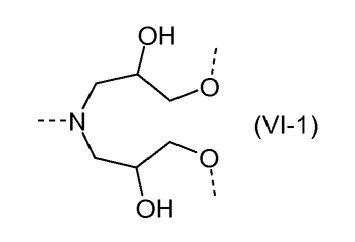

Derartige Polysilane **PS1** der Formel V und VI, beziehungsweise V-1 und VI-1, lassen sich über Reaktionen von primären oder sekundären Aminen mit Epoxiden, beziehungsweise mit Glycidylethern, herstellen. Die Silangruppen können sowohl vom Amin oder vom Epoxid, beziehungsweise vom Glycidylether, stammen. Die gestrichelten Linien in den Formeln dieses Dokumentes stellen jeweils die Bindung zwischen dem jeweiligen Substituenten und dem dazugehörigen Molekülrest dar.
Derartige Polysilane **PS1** sind einerseits beispielsweise die Reaktionsprodukte aus 3-Aminopropyltrimethoxysilan oder Bis(3-trimethoxysilylpropyl)amin mit Bisphenol-A-Diglycidylether oder Hexandiol-Diglycidylether.
Derartige Polysilane **PS1** sind andererseits beispielsweise Reaktionsprodukte aus einem Epoxysilan der Formel (VII) mit einem Aminosilan der Formel (VIII).

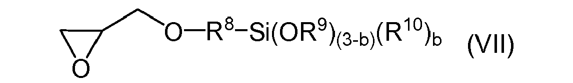

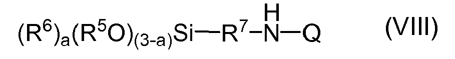

Hierbei steht R⁹ unabhängig voneinander für eine Alkylgruppe mit 1 bis 4 C-Atomen oder eine Acylgruppe mit 1 bis 4 C-Atomen. Bevorzugt steht R⁹ für eine Methylgruppe. R¹⁰ steht unabhängig voneinander für H oder für eine Alkylgruppe mit 1 bis 10 C-Atomen. R⁷ und R⁸ stehen unabhängig voneinander je für eine lineare oder verzweigte Alkylengruppe mit 1 bis 6 C-Atomen, insbesondere für Propylen. Q steht für H oder für einen Alkyl-, Cycloalkyl- oder Arylrest mit 1 bis 20 C-Atomen oder einen Rest der Formel -(CH₂-CH₂-NH)_{d}H oder für einen Rest der Formel -R⁷-Si(OR⁵)₍₃₋ₐ₎(R⁶)ₐ. Der Indizes b steht für einen Wert von 0, 1 oder 2, bevorzugt für 0. Der Indizes d steht für einen Wert von 1 oder 2.

R⁶, R⁵ und a weisen die bereits für Formel (III) beschriebenen Bedeutungen auf.
Derartige Polysilane **PS1** können eine Struktur der Formel (IX) aufweisen.

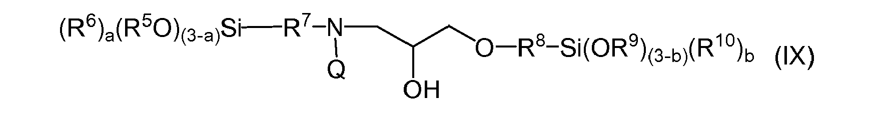

Besonders bevorzugt als Polysilan **PS1,** welches mindestens eine sekundäre oder tertiäre Aminogruppe aufweist, sind Reaktionsprodukte von 3-Aminopropyltrimethoxysilan oder Bis(3-trimethoxysilylpropyl)amin und 3-Glycidyloxypropyltrimethoxysilan.

Als Polysilane **PS2** sind insbesondere Polysilane geeignet, welche aus der Reaktion mindestens eines Aminosilans oder Mercaptosilans der Formel (X) mit mindestens einem Polyisocyanat oder mit mindestens einem Isocyanatgruppen aufweisenden Polyurethanpolymer erhalten werden. Derartige Polysilane **PS2** weisen insbesondere die Formel (XI) auf.

(R⁶)ₐ(R⁵O)₍₃₋ₐ₎Si-R⁷-YH (X)

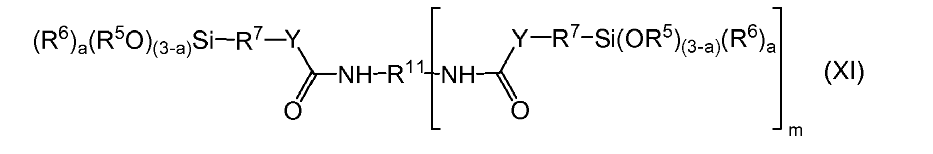

Hierbei steht Y für NQ oder S. Weiterhin steht R¹¹ für ein Polyisocyanat oder Isocyanatgruppen aufweisendes Polyurethanpolymer nach Entfernung von m NCO-Gruppen und m für einen Wert von 1, 2 oder 3, insbesondere für 1 oder 2.
Besonders geeignet als Aminosilane der Formel (X) sind Aminosilane mit primären Aminogruppen, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan und Aminomethyl-methoxydimethylsilan. Bevorzugt sind 3-Aminopropyltrimethoxysilan und 3-Aminopropyl-methyldimethoxysilan.
Als Aminosilane der Formel (X) können, obwohl sie langsamer in der Reaktion sind, auch Aminosilane mit sekundären Aminogruppen verwendet werden. Besonders geeignet sind Aminosilane mit sekundären Aminogruppen welche ausgewählt sind aus der Gruppe bestehend aus N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan; N-Ethyl-3-Aminopropyl-dimethoxy-methylsilan, N-Phenyl-4-Aminobutyl-trimethoxysilan, N-Phenylaminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, N-(2-Aminoethyl)-3-aminopropyl-methyldimethoxysilan, 3-[2-(2-Aminoethylamino)-ethylamino]-propyl-methyldimethoxysilan, Bis(3-trimethoxysilylpropyl)amin und Bis(3-triethoxysilylpropyl)amin.

Bevorzugte Aminosilane der Formel (X) mit sekundären Aminogruppen sind N-Butyl-3-Aminopropyl-trimethoxysilan, N-Methyl-3-Aminopropyl-trimethoxysilan, N-Phenyl-3-Aminopropyl-trimethoxysilan oder Bis(3-trimethoxy-silylpropyl)amin.

Als Mercaptosilane der Formel (X) sind insbesondere die vorhergehend erwähnten Mercaptosilane **MS** geeignet.

Als Polyisocyanate sind insbesondere Diisocyanate oder Triisocyanate geeignet. Bevorzugt sind kommerziell erhältliche Polyisocyanate, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), sowie beliebige Mischungen der vorgenannten Isocyanate und deren Biurete oder deren Isocyanurate. Besonders bevorzugt sind MDI, TDI, HDI und IPDI und deren Biurete oder Isocyanurate.

Isocyanatgruppen aufweisende Polyurethanpolymere lassen sich insbesondere aus den gerade genannten Polyisocyanaten und Polyolen und/oder Polyaminen, wie sie in der Patentschrift US 2006/0122352 A1 in den Abschnitten [0029] bis [0041] und [0043] bis [0044] offenbart sind und deren Inhalt insbesondere hiermit durch Bezugnahme eingeschlossen wird, nach bekannter Art und Weise erhalten.

Als Polysilan **PS** ist ein Polysilan der Formel (IV) bevorzugt, meist bevorzugt ist das Polysilan **PS** ein Bis(3-trimethoxysilylpropyl)amin oder Bis(3-triethoxysilylpropyl)amin.

Typischerweise enthält die Zusammensetzung mindestens ein Polysilan **PS** mit einem Gewichtsanteil an Polysilan **PS** von 0.1- 10 Gew.-%, insbesondere 0.5 - 7 Gew.-%, bevorzugt 1 - 5 Gew.-%, bezogen auf das Gewicht der Zusammensetzung.

Die Zusammensetzung weist ein aromatisches sekundäres Aminosilan **AS** auf. Für die Zusammensetzung geeignete aromatische sekundäre Aminosilane **AS** weisen vorzugsweise die Formel (I) beziehungsweise die Formel (I') auf.

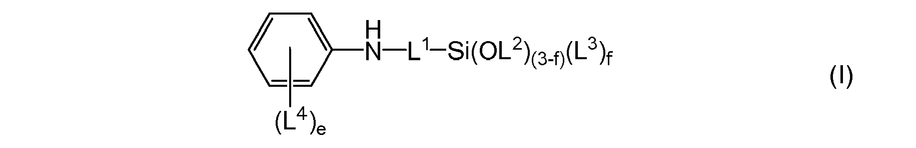

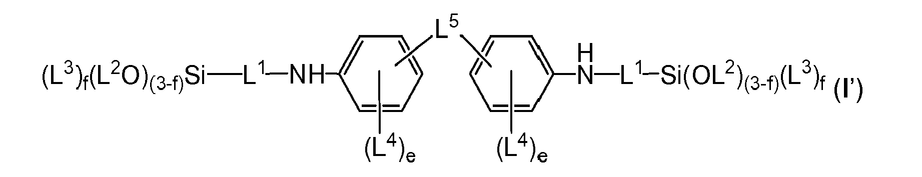

L¹ steht hierbei für eine lineare oder verzweigte Alkylengruppe, insbesondere mit 1 bis 5, bevorzugt mit 3 oder 4 C-Atomen. Weiterhin steht L² unabhängig voneinander für eine Alkylgruppe mit 1 bis 4 C-Atomen oder eine Acylgruppe mit 1 bis 4 C-Atomen, bevorzugt für eine Methylgruppe. L³ steht unabhängig voneinander für H oder für eine Alkylgruppe mit 1 bis 10 C-Atomen. Des Weiteren steht L⁴ unabhängig voneinander für einen gegebenenfalls verzweigten Alkylrest mit 1 bis 5 C-Atomen, einen gegebenenfalls verzweigten Alkoxyrest mit 1 bis 5 C-Atomen, einen gegebenenfalls verzweigten Esterrest mit 1 bis 5 C-Atomen, NO₂ oder Halogenatome. Insbesondere steht e für 0. Weiterhin steht L⁵ für einen gegebenenfalls verzweigten Alkylenrest mit 1 bis 5 C-Atomen. Ausserdem steht f für einen Wert von 0, 1 oder 2 und e für eine ganze Zahl von 0 bis 3.

Besonders geeignet sind aromatische sekundäre Aminosilane welche ausgewählt sind aus der Gruppe bestehend aus N-((Trimethoxysilyl)methyl)anilin, N-((Triethoxysilyl)methyl)anilin, N-(3-(dimethoxy(methyl)-silyl)-2,2-dimethylpropyl)anilin, N-(3-(Trimethoxysilyl)propyl)anilin, N-(3-(Triethoxysilyl)propyl)anilin, N-(4-(Trimethoxysilyl)butyl)anilin, N-(5-(Trimethoxysilyl)pentyl)anilin und N-(3-(Diethoxy(methyl)silyl)-2-methylpropyl)anilin.

Beispiele für aromatische sekundäre Aminosilane **AS** der Formel (I') sind 4,4'-methylenbis(N-(3-(trimethoxysilyl)propyl)anilin), 4,4'-(propan-2,2-diyl)bis(N-(3-(trimethoxysilyl)propyl)anilin) und 4,4'-methylenbis(2-methyl-N-(3-(trimethoxysilyl)propyl)anilin).

Als aromatische sekundäre Aminosilane **AS** sind N-(3-(Trimethoxysilyl)propyl)anilin und N-(3-(Triethoxysilyl)propyl)anilin, insbesondere N-(3-(Trimethoxysilyl)propyl)anilin, bevorzugt.

Typischerweise enthält die Zusammensetzung mindestens ein aromatisches sekundäres Aminosilan **AS** mit einem Gewichtsanteil an aromatischem sekundären Aminosilan **AS** von 0.1- 10 Gew.-%, insbesondere 0.5 - 7 Gew.-%, bevorzugt 1 - 5 Gew.-%, bezogen auf das Gewicht der Zusammensetzung.

Die Zusammensetzung enthält eine Organo-Titanverbindung. Die Organo-Titanverbindung weist hierbei mindestens einen über eine Sauerstoff-Titan-Bindung an das Titan-Atom gebundenen Substituenten, insbesondere vier über eine Sauerstoff-Titan-Bindung an das Titan-Atom gebundene Substituenten, auf.
Als über eine Sauerstoff-Titan-Bindung an das Titan-Atom gebundenen Substituenten sind besonders geeignete Substituenten diejenigen, welche aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind.
Besonders geeignet sind Verbindungen, bei denen alle an das Titan gebundene Substituenten aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können. Bevorzugt sind Substituenten mit 4 bis 8 C-Atomen. Besonders bevorzugt sind diese Substituenten identisch.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TBT, TOT TPT, NPT, BTM, AA, AA-75, AA-95, AA-1 05, TE, ETAM, OGT von DuPont.
Bevorzugt gelten Ken-React® KR 7, KR 9S, KR 12, KR 26S, KR 38S, KR44, LICA 09, LICA 44, NZ 44, sowie Tyzor® ET, TBT, TOT, TPT, NPT, BTM, AA, AA-75, AA-95, AA-105, TE, ETAM, OGT von DuPont. Besonders bevorzugt sind Tetra(n-Butyl)titanat, d.h. Tyzor® TBT und Octylenglycoltitanat, d.h. Tyzor® OGT.

Es ist dem Fachmann klar, dass diese Organo-Titanverbindungen unter dem Einfluss von Wasser hydrolysieren und an das Titan-Atom gebundene OH-Gruppen bilden. Derartige hydrolysierte, beziehungsweise teilhydrolysierte, Organo-Titanverbindungen können dann ihrerseits kondensieren und Kondensationsprodukte bilden, welche Ti-O-Ti Bindungen aufweisen. Sind Silane und/oder Titanate als Haftvermittler gemischt, sind auch gemischte Kondensationsprodukte möglich, welche Si-O-Ti Bindungen aufweisen. Ein geringer Anteil an derartigen Kondensationsprodukten ist möglich, insbesondere wenn sie löslich, emulgierbar oder dispergierbar sind.

Typischerweise enthält die Zusammensetzung mindestens eine Organo-Titanverbindung mit einem Gewichtsanteil an Organo-Titanverbindung von 0.5 - 15 Gew.-%, insbesondere von 1- 12 Gew.-%, bevorzugt von 2 - 10 Gew.-%, bezogen auf das Gewicht der Zusammensetzung.

In einer möglichen Ausführungsform umfasst die Zusammensetzung zusätzlich mindestens ein Epoxidharz **EP.** Geeignete Epoxidharze **EP** sind insbesondere Epoxidharze der Formel (XII).

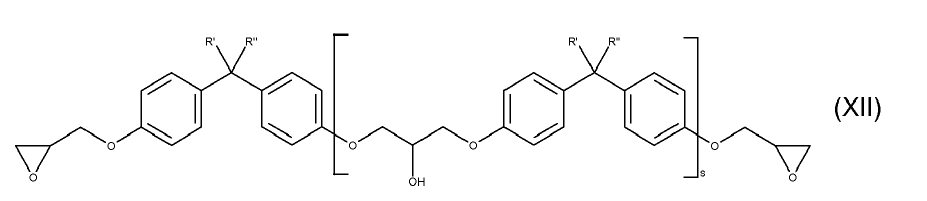

Hierbei stehen die Substituenten R' und R" unabhängig voneinander entweder für H oder CH₃. Der Index s steht für einen Wert von 0 bis 20.
Verbindungen der Formel (XII) mit einem Index s von > 1.5, insbesondere von 2 bis 12 werden als Epoxid-Festharze bezeichnet. Derartige Epoxid-Festharze sind kommerziell erhältlich beispielsweise von Dow Chemical oder Huntsman oder Hexion, beispielsweise als D.E.R.™ 671 oder D.E.R.™ 692 (Dow) oder Araldite® GT 7071 (Huntsman).

Verbindungen der Formel (XII) mit einem Index s zwischen 1 und 1.5 werden vom Fachmann als Semisolid-Epoxidharze bezeichnet. Für die hier vorliegende Erfindung werden sie ebenfalls als Epoxid-Festharze betrachtet. Bevorzugt sind jedoch Epoxid-Festharze im engeren Sinn, d.h. wo der Index s einen Wert von > 1.5 aufweist. Der Begriff "Epoxid-Festharz" ist dem Epoxid-Fachmann bestens bekannt und wird im Gegensatz zu "Epoxid-Flüssigharzen" verwendet. Die Glastemperatur von Epoxid-Festharzen liegt über Raumtemperatur, d.h. sie lassen sich bei Raumtemperatur zu schüttfähigen Pulvern oder Granulaten zerkleinern.

Verbindungen der Formel (XII) mit einem Index s zwischen 0 bis 1 werden als Epoxid-Flüssigharze bezeichnet. Bevorzugt steht s für einen Wert von kleiner als 0.2.
Es handelt sich somit beispielsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Epoxid-Flüssigharze sind beispielsweise als Araldite® GY 250, Araldite® PY 304, Araldite® GY 282 (Huntsman) oder D.E.R.™ 331 oder D.E.R.™ 336 (Dow) oder D.E.R.™ 330 (Dow) oder Epikote 828 (Hexion) erhältlich.

Weiterhin geeignet als Epoxidharz **EP** sind sogenannte Novolake. Diese weisen insbesondere die folgende Formel auf: 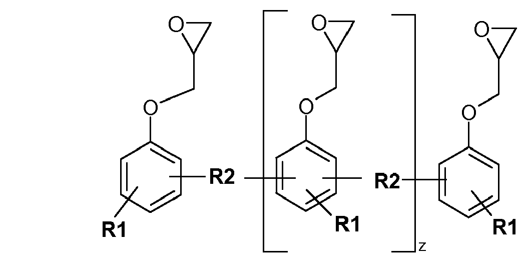 mit 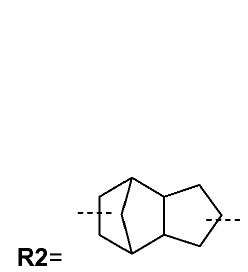 oder
CH₂, **R1** = H oder Methyl und z = 0 bis 7.

Insbesondere handelt es sich hierbei um Phenol- oder Kresol-Novolake (**R2** = CH₂).
Solche Novolake sind unter dem Handelnamen EPN oder ECN sowie Tactix® von Huntsman oder unter der Produktereihe D.E.N™ von Dow Chemical kommerziell erhältlich.

Bevorzugt stellt das Epoxidharz **EP** ein Epoxid-Festharz der Formel (XII) mit einem Index s von > 1.5, insbesondere von 2 bis 12, dar.
Falls die Zusammensetzung Epoxidharz **EP** enthält, kann dieses grundsätzlich mit dem Mercaptosilan **MS** oder dem Polysilian **PS** oder mit anderen in der Zusammensetzung vorhandenen Epoxidgruppen-reaktiven Gruppen reagieren.
Es ist weiterhin von Vorteil, wenn das Epoxidharz **EP** ein Epoxid-Equivalenzgewicht (EEW) von 300 g/eq - 2000 g/eq, insbesondere 400 g/eq - 1000 g/eq, aufweist.
Der Gewichtsanteil des in der Zusammensetzung eingesetzten Epoxidharzes **EP** beträgt vorteilhafterweise 1 - 40 Gew.-%, insbesondere 1.5 - 20 Gew.-%, bevorzugt 2 - 10 Gew.-%, am Gewicht der Zusammensetzung.

Es hat sich als vorteilhaft erwiesen, wenn die Zusammensetzung mindestens ein Lösungsmittel, insbesondere mindestens ein organisches Lösungsmittel enthält. Als derartige organische Lösungsmittel eignen sich insbesondere Kohlenwasserstoffe oder Ketone oder Carbonsäureester oder Alkohole. Bevorzugte Beispiele hierfür sind Toluol, Xylol, Hexan, Heptan, Methylethylketon, Aceton, Butylacetat, Ethylacetat, Ethanol, Isopropanol, Methanol. Besonders bevorzugt sind Hexan, Heptan, Methylethylketon, Aceton, Butylacetat, Ethylacetat, Ethanol, Isopropanol, Methanol. Weiterhin gibt es spezifische Ausführungsformen, in denen auch Wasser als Lösungsmittel, allenfalls in Abmischung mit einem organischen Lösungsmittel, geeignet ist.
Das Lösungsmittel wird insbesondere in einer Menge von 40 - 99 Gew.-%, insbesondere von 60 - 95 Gew.-%, bezogen auf das Gewicht der Zusammensetzung, eingesetzt.

Die Zusammensetzung kann zusätzlich mindestens einen Haftvermittler, insbesondere mindestens ein Silan oder mindestens eine Organo-Zirkoniumverbindung, enthalten.
Als Haftvermittlersubstanzen eignen sich insbesondere Tetraalkoxysilane, Organoalkoxysilane und Organo-Zirkoniumverbindungen sowie Mischung daraus. Als Organoalkoxysilane sind neben den bereits genannten Aminosilanen, Epoxysilanen und Mercaptosilanen insbesondere (Meth)acrylatosilan und Vinylsilan, insbesondere 3-(Meth)acryloxypropyltriethoxysilan, 3-(Meth)acryloxypropyltrimethoxysilan, Vinyltrimethoxysilan und Vinyltriethoxysilan, zu nennen.

Die Zusammensetzung kann gegebenenfalls weitere Bestandteile aufweisen. Derartige weitere Bestandteile sollten jedoch die Lagerstabilität der Zusammensetzung nicht beeinträchtigen. Weitere Bestandteile sind beispielsweise Katalysatoren, Lumineszenzindikatoren wie Uvitex® OB von Ciba Specialty Chemicals, Stabilisatoren, Tenside, Säuren, Farbstoffe und Pigmente.

Vorzugsweise enthält die Zusammensetzung oder besteht die Zusammensetzung aus einem Mercaptosilan **MS,** insbesondere 3-Mercaptopropyl-trimethoxysilan, in einer Menge von 2 - 5 Gew.-% bezogen auf das Gesamtgewicht der Zusammensetzung, einem Polysilan **PS,** insbesondere Bis(3-trimethoxysilylpropyl)amin, in einer Menge von 1 - 5 Gew.-% bezogen auf das Gesamtgewicht der Zusammensetzung, einem aromatischen sekundären Aminosilan **AS,** insbesondere N-(3-(Trimethoxysilyl)propyl)anilin, in einer Menge von 1 - 5 Gew.-% bezogen auf das Gesamtgewicht der Zusammensetzung, einer Organo-Titanverbindung, insbesondere Tetra(n-Butyl)titanat oder Octylenglycoltitanat, in einer Menge von 2 - 10 Gew.-% bezogen auf das Gesamtgewicht der Zusammensetzung und einem Lösungsmittel, insbesondere Heptan, in einer Menge von 60 - 95 Gew.-% bezogen auf das Gesamtgewicht der Zusammensetzung.

Vorzugsweise beträgt in der Zusammensetzung das molare Verhältnis aller in der Zusammensetzung eingesetzten Mercaptosilane **MS** zu allen in der Zusammensetzung eingesetzten Polysilane **PS** zu allen in der Zusammensetzung eingesetzten aromatischen sekundären Aminosilane **AS** zu allen in der Zusammensetzung eingesetzten Organo-Titanverbindungen von 1 zu 0.05 - 1.5 zu 0.05 - 1.5 zu 0.1 - 3, insbesondere von 1 zu 0.1 - 1.2 zu 0.1 - 1.2 zu 0.1 - 1.5.

Die Zusammensetzung eignet sich ausgezeichnet als Haftvermittler und kann breit eingesetzt werden. Insbesondere kann sie als Primer oder als Primerbestandteil eingesetzt werden. Unter einem Primer wird ein Voranstrich verstanden, welcher auf eine Oberfläche appliziert wird und nach einer gewissen Wartezeit nach der Applikation, der sogenannten Ablüftezeit von einem Klebstoff oder Dichtstoff oder einer Beschichtung überdeckt wird und dazu dient die Haftung des Klebstoffs oder Dichtstoffs oder der Beschichtung auf der betreffenden Substratoberfläche zu verbessern.
Die Zusammensetzung eignet sich darum zur Verwendung als Haftvoranstrich für ein Substrat **S1,** insbesondere handelt es sich bei dem Substrat **S1** um Glas oder Glaskeramik.
Die Zusammensetzung kann jedoch auch als Haftvermittler in einem Klebstoff oder Dichtstoff oder einer Beschichtung verwendet werden. Insbesondere geeignet ist der Einsatz in einem Klebstoff oder Dichtstoff.

Für die Anwendung der Zusammensetzung als Haftvermittler gibt es unterschiedliche Möglichkeiten der Anwendung:
In einem ersten Verfahren des Verklebens oder Abdichtens von zwei Substraten **S1** und **S2** umfasst es mindestens die folgenden Schritte
   a) Applizieren einer Zusammensetzung wie sie vorhergehend beschrieben wurde auf ein erstes Substrat **S1**
   b) Applizieren eines Klebstoffs oder Dichtstoffs auf die abgelüftete nach Schritt a) applizierte Zusammensetzung
   c) Kontaktieren des Klebstoffs oder Dichtstoffs mit einem zweiten Substrat **S2**;

In einem zweiten Verfahren des Verklebens oder Abdichtens von zwei Substraten **S1** und **S2** umfasst es mindestens die folgenden Schritte
a') Applizieren einer Zusammensetzung wie sie vorhergehend beschrieben wurde auf ein erstes Substrat **S1**
b') Applikation eines Klebstoffs oder Dichtstoffs auf die Oberfläche eines zweiten Substrates **S2**
c') Kontaktieren des Klebstoffs oder Dichtstoffs mit der abgelüfteten Zusammensetzung, welche sich auf dem Substrat **S1** befindet;

In einem dritten Verfahren des Verklebens oder Abdichtens von zwei Substraten **S1** und **S2** umfasst es mindestens die folgenden Schritte
a") Applizieren einer Zusammensetzung wie sie vorhergehend beschrieben wurde auf ein erstes Substrat **S1**
b") Applizieren eines Klebstoffs oder Dichtstoffs auf das erste Substrat **S1** und zweite Substrat **S2,** auf welche zumindest eines davon nach Schritt a") eine Zusammensetzung appliziert worden ist
c") Kontaktieren der applizierten Klebstoffe oder Dichtstoffe miteinander unter Fügen der Substratteile zu einem Klebverbund oder Dichtverbund;

In einem vierten Verfahren des Verklebens oder Abdichtens von zwei Substraten **S1** und **S2** umfasst es mindestens die folgenden Schritte
a''') Applizieren einer Zusammensetzung wie sie vorhergehend beschrieben wurde auf ein erstes Substrat **S1**
b''') Ablüften der Zusammensetzung
c''') Applikation eines Klebstoffs oder Dichtstoffs zwischen die Oberflächen des Substrates **S1** und **S2.**

In all diesen vier Möglichkeiten besteht das zweite Substrat **S2** aus demselben oder unterschiedlichem Material wie das Substrat **S1**.

Nach dem Schritt c), c'), c") oder c''') schliesst sich typischerweise ein Schritt des Aushärtens des Klebstoffs oder Dichtstoffs an. Der Fachmann versteht, dass je nach verwendetem System und Reaktivität des Klebstoffes Vernetzungsreaktionen, und damit bereits das Aushärten, bereits während der Applikation beginnen kann. Der Hauptteil der Vernetzung und damit im engeren Sinn des Terms das Aushärten findet jedoch nach der Applikation statt, ansonsten sich nämlich auch Probleme mit dem Aufbau der Haftung zur Substratoberfläche ergeben.

Insbesondere ist zumindest eines der Substrate **S1** oder **S2** Glas oder Glaskeramik. Insbesondere handelt es sich bei einem Substrat um Glas oder Glaskeramik und beim anderen Substrat um einen Lack oder ein lackiertes Metall oder ein lackierte Metalllegierung. Somit ist das Substrat **S1**, respektive **S2,** Glas oder Glaskeramik und das Substrat **S2,** respektive **S1**, ein Lack oder ein lackiertes Metall oder eine lackierte Metalllegierung.

Klebstoffe oder Dichtstoffe können ein- oder zweikomponentige Klebstoffe oder Dichtstoffe sein.
Geeignete einkomponentige Klebstoffe oder Dichtstoffe enthalten insbesondere feuchtigkeitshärtende Isocyanatgruppen-terminierte Polymere. Solche Klebstoffe oder Dichtstoffe vernetzen unter dem Einfluss von Wasser, insbesondere von Luftfeuchtigkeit. Beispiele für solche einkomponentige feuchtigkeitshärtende Polyurethanklebstoffe sind solche aus der SikaFlex®-und SikaTack®-Produktelinie, wie sie von Sika Schweiz AG kommerziell erhältlich sind.

Die oben erwähnten Isocyanat-terminierten Polymeren werden aus Polyolen, insbesondere Polyoxyalkylenpolyolen, und Polyisocyanaten, insbesondere Diisocyanaten, hergestellt.
Geeignet als zweikomponentige Klebstoffe oder Dichtstoffe sind zweikomponentige Polyurethan-Klebstoffe oder -Dichtstoffe, deren erste Komponente ein Amin- oder ein Polyol umfassen und deren zweite Komponente eine NCO-haltiges Polymer oder ein Polyisocyanat umfassen. Beispiele für solche zweikomponentige raumtemperaturhärtende Polyurethanklebstoffe sind solche aus der SikaForce® -Produktelinie, wie sie von Sika Schweiz AG kommerziell erhältlich sind.

Es hat sich gezeigt, dass insbesondere bei feuchtigkeitshärtenden Polyurethan-Klebstoffen oder -Dichtstoffen eine starke Verbesserung der Haftung, insbesondere auf Glas und Glaskeramiken und insbesondere nach Cataplasmaklimalagerung, unter Verwendung der beschriebenen Zusammensetzung erreicht werden kann.

Diese Kleb- und Abdichtverfahren finden insbesondere in der Herstellung von Artikeln, insbesondere von Transportmittel, Anwendung. Derartige Artikel stellen insbesondere Automobile, Busse, Lastkraftwagen, Schienenfahrzeuge, Schiffe oder Luftfahrzeuge dar.
Als meist bevorzugte Anwendung ist das Verglasen von Transportmitteln, insbesondere von Strassen- und Schienenfahrzeugen, zu nennen.

### Beispiele

Es wurden unterschiedliche Zusammensetzungen bestehend aus den Inhaltsstoffen in Gewichtsteilen gemäss den Angaben in Tabelle 1 hergestellt. Die Zusammensetzungen ***Ref1*** bis ***Ref5*** stellen Vergleichsbeispiele dar.

### Verwendete Rohstoffe:

*"A-189"* 3-Mercaptopropyl-trimethoxysilan Silquest® A189, GE Silicones, Schweiz
*"A-1170"* Bis(trimethoxysilylpropyl)amin Silquest® A1170, GE Silicones, Schweiz
*"NPAPTS"* N-Phenyl-3-Aminopropyl-trimethoxysilan, Sigma-Aldrich Chemie GmbH, Schweiz
*"A-1120"* N-(2-Aminoethyl)-3-aminopropyl-trimethoxysilan Silquest® A1120, GE Silicones, Schweiz
*"OGT"* Octylenglycoltitanat, Tyzor® OGT, DuPont, USA
*"TBT"* Tetra(n-Butyl)titanat, Tyzor® TBT, DuPont, USA

### Herstellung der Zusammensetzungen

Gemäss den Mengen in der Tabelle 1 wurden für die Zusammensetzungen die Lösungsmittel zusammen mit den gegebenenfalls vorhandenen weiteren Inhaltsstoffen bei 23°C unter Ausschluss von Luftfeuchtigkeit vermischt. Vergleichsbeispiel ***Ref5*** stellt das Beispiel 23 aus WO-A-2005/059056 dar.

**Tabelle 1 Inhaltsstoffe der Zusammensetzungen in Gewichtsteilen.**

| **Inhaltsstoffe** | ***1*** | ***2*** | ***3*** | ***4*** | ***5*** | ***6*** |
|---|---|---|---|---|---|---|
| *A-189* | 3.5 | 3.5 | 3.5 | 3.5 | 3.5 | 3.5 |
| *A-1170* | 1.7 | 1.7 | 1.7 | 1.7 | 1.7 | 1.8 |
| *NPAPTS* | 1.7 | 1.7 | 1.7 | 1.7 | 1.7 | 1.7 |
| *OGT* | 5.0 | 5.0 | 2.5 | - | - | 5.0 |
| *TBT* | - | - | - | 5.0 | 2.7 | - |
| Toluol | - | - | - | - | - | 88.0 |
| Heptan | 88.1 | 138.1 | 90.6 | 88.1 | 90.4 | - |
| Summe | 100 | 150 | 100 | 100 | 100 | 100 |
| | | | | | | |

| **Inhaltsstoffe** | ***Ref1*** | ***Ref2*** | ***Ref3*** | ***Ref4*** | ***Ref5*** | |
|---|---|---|---|---|---|---|
| *A-189* | 3.7 | 3.5 | 3.5 | 3.7 | 3.3 | |
| *A-1170* | - | - | 1.7 | 3.7 | 0.2 | |
| *NPAPTS* | 3.7 | 3.5 | - | - | - | |
| *A-1120* | - | - | - | - | 0.4 | |
| *OGT* | - | 5.0 | - | - | 3.0 | |
| *TBT* | - | - | - | - | - | |
| Toluol | 92.6 | - | - | 92.6 | 73.1 | |
| Heptan | - | 88.0 | 94.8 | - | - | |
| Summe | 100 | 100 | 100 | 100 | 80 | |

### Testverfahren

### Applikation und Aushärtung

Für die Versuche in Tabelle 2 und 3 wurden die Zusammensetzungen jeweils auf dem Substrat im so genannten "wipe on/off"-Verfahren mittels eines Wischtuchs (Tela^{®}, Tela-Kimberly Switzerland GmbH) appliziert.
Als Substrate verwendet wurden:
- Glaskeramik, Heckscheibe eines Mercedes Benz, Daimler AG, S-Klasse, BR 221, PPG, ("*Sub1*"),
- Glaskeramik, Heckscheibe eines Mercedes Benz, Daimler AG, C-Klasse, BR 203, PPG, ("*Sub2*"),
- Standard Flachglas, Sn-Seite, Rocholl GmbH, Deutschland, ("*Glas*").

Nach 10 Minuten Ablüftzeit wurden die Klebstoffe als Rundraupe mit einer Kartuschenpresse und einer Düse auf die mit Zusammensetzung beschichtete Substratoberfläche aufgetragen. Die Klebstofftemperatur bei der Applikation lag bei 60°C.
Als Klebstoff wurden die einkomponentigen Polyurethanklebstoffe Sikaflex^{®}-250 DM-2 ("*DM2*"), beziehungsweise Sikaflex^{®}-250 DM-3 ("*DM3*") verwendet, welche von Sika Schweiz AG kommerziell erhältlich sind.
Anschliessend wurde der Klebstoff während 7 Tagen bei 23°C und 50% relativer Luftfeuchtigkeit (Raumtemperatur-Klimalagerung: "KL") ausgehärtet und es wurde ein Drittel der Raupe mittels unten beschriebenen Haftungstest getestet. Danach wurde die Probe während weiteren 7 Tagen ins Wasser bei 23°C gelegt (Wasserlagerung: "WL"). Anschliessend wurde die Haftung durch den Raupentest für ein weiteres Drittel der Raupe getestet. Daraufhin wurden die Substrate einem Cataplasmaklima von 100% relativer Luftfeuchtigkeit und 70°C ("CL"), ausgesetzt und danach die Haftung des letzten Drittels der Raupe ermittelt.

### Haftungstest ("Raupentest")

Die Haftung des Klebstoffes wurde mittels 'Raupentest' getestet. Hierbei wird am Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 76 - 95% Kohäsionsbruch
3 = 25 - 75% Kohäsionsbruch
4 = < 25% Kohäsionsbruch
5 = 0% Kohäsionsbruch (rein adhäsiver Bruch).

**Tabelle 2 Haftungsresultate nach unterschiedlichen Lagerungen.**

| | | ***1*** | | | ***2*** | | | ***3*** | | | ***4*** | | | ***5*** | | |
|---|---|---|---|---|---|---|---|---|---|---|---|---|---|---|---|---|
| Substrat | Kleb-stoff | KL | WL | CL | KL | WL | CL | KL | WL | CL | KL | WL | CL | KL | WL | CL |
| *Sub1* | *DM2* | 1 | 1 | 3 | 1 | 1 | 3 | 1 | 2 | 3 | 1 | 1 | 3 | 1 | 1 | 2 |
| | | | | | | | | | | | | | | | | |

| | | ***Ref3*** | | | | | | | | | | | | | | |
|---|---|---|---|---|---|---|---|---|---|---|---|---|---|---|---|---|
| Substrat | Kleb-stoff | KL | WL | CL | | | | | | | | | | | | |
| *Sub1* | *DM2* | 4 | 4 | 4 | | | | | | | | | | | | |

**Tabelle 3 Haftungsresultate nach unterschiedlichen Lagerungen.**

| | | ***6*** | | | ***Ref1*** | | | ***Ref2*** | | | ***Ref4*** | | | ***Ref5*** | | |
|---|---|---|---|---|---|---|---|---|---|---|---|---|---|---|---|---|
| Substrat | Kleb-stoff | KL | WL | CL | KL | WL | CL | KL | WL | CL | KL | WL | CL | KL | WL | CL |
| *Sub2* | *DM2* | 2 | 2 | 1 | 4 | 4 | 4 | 5 | 5 | 4 | 4 | 4 | 2 | 1 | 1 | 2 |
| | *DM3* | 1 | 2 | 1 | 3 | 3 | 3 | 5 | 5 | 1 | 3 | 4 | 2 | 1 | 2 | 2 |
| *Glas* | *DM2* | 1 | 1 | 1 | 1 | 1 | 1 | 3 | 4 | 4 | 1 | 1 | 3 | 1 | 1 | 4 |
| | *DM3* | 1 | 1 | 1 | 1 | 1 | 1 | 3 | 3 | 1 | 1 | 1 | 3 | 1 | 1 | 3 |

Die Resultate aus Tabelle 2 und 3 zeigen, dass sich die Zusammensetzungen ***1*** bis ***6***, verglichen mit den Vergleichsbeispielen ***Ref1*** bis ***Ref5*** über eine deutlich verbesserte Haftung auf Glas und/oder Glaskeramik auszeichnen. Insbesondere zeigt sich dies in einer verbesserten Haftung nach Cataplasmaklimalagerung.

## Patentansprüche

1. Zusammensetzung umfassend
i) mindestens ein Mercaptosilan **MS;** sowie
ii) mindestens ein Polysilan **PS;** sowie
iii) mindestens ein aromatisches sekundäres Aminosilan **AS;** sowie
iv) mindestens eine Organo-Titanverbindung.

2. Zusammensetzung gemäss Anspruch 1, **dadurch gekennzeichnet, dass** das Polysilan **PS** mindestens eine sekundäre oder tertiäre Aminogruppe, insbesondere eine sekundäre Aminogruppe, aufweist.

3. Zusammensetzung gemäss einem der vorhergehenden Ansprüche, **dadurch gekennzeichnet, dass** das aromatische sekundäre Aminosilan **AS** die Formel (I), beziehungsweise die Formel (I') aufweist 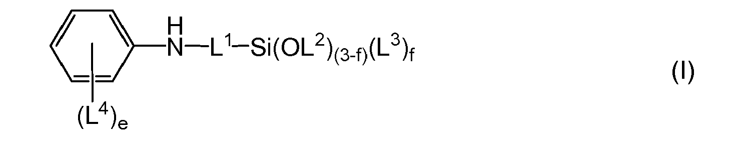 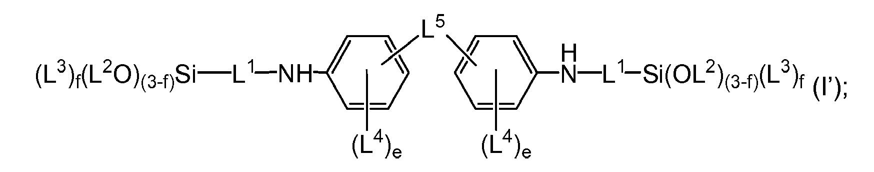 wobei L¹ für eine lineare oder verzweigte Alkylengruppe, insbesondere mit 1 bis 5, bevorzugt mit 3 oder 4 C-Atomen;
L² unabhängig voneinander für eine Alkylgruppe mit 1 bis 4 C-Atomen oder eine Acylgruppe mit 1 bis 4 C-Atomen, bevorzugt für eine Methylgruppe steht;
L³ unabhängig voneinander für H oder für eine Alkylgruppe mit 1 bis 10 C-Atomen steht;
L⁴ unabhängig voneinander für einen gegebenenfalls verzweigten Alkylrest mit 1 bis 5 C-Atomen, einen gegebenenfalls verzweigten Alkoxyrest mit 1 bis 5 C-Atomen, einen gegebenenfalls verzweigten Esterrest mit 1 bis 5 C-Atomen, NO₂ oder Halogenatome steht;
L⁵ für einen gegebenenfalls verzweigten Alkylenrest mit 1 bis 5 C-Atomen steht;
f für einen Wert von 0, 1 oder 2 steht und e für eine ganze Zahl von 0 bis 3 steht.

4. Zusammensetzung gemäss einem der vorhergehenden Ansprüche, **dadurch gekennzeichnet, dass** die Organo-Titanverbindung vier über eine Sauerstoff-Titan-Bindung an das Titan-Atom gebundene Substituenten, insbesondere mit 4 bis 8 C-Atomen, aufweist.

5. Zusammensetzung gemäss einem der vorhergehenden Ansprüche, **dadurch gekennzeichnet, dass** der Gewichtsanteil an Mercaptosilan **MS** 0.5- 10 Gew.-%, insbesondere 1 - 7 Gew.-%, bevorzugt 2 - 5 Gew.-%, bezogen auf das Gewicht der Zusammensetzung, beträgt.

6. Zusammensetzung gemäss einem der vorhergehenden Ansprüche, **dadurch gekennzeichnet, dass** der Gewichtsanteil an Polysilan **PS** 0.1-10 Gew.-%, insbesondere 0.5 - 7 Gew.-%, bevorzugt 1 - 5 Gew.-%, bezogen auf das Gewicht der Zusammensetzung, beträgt.

7. Zusammensetzung gemäss einem der vorhergehenden Ansprüche, **dadurch gekennzeichnet, dass** der Gewichtsanteil an aromatischem sekundären Aminosilan **AS** 0.1 - 10 Gew.-%, insbesondere 0.5 - 7 Gew.-%, bevorzugt 1 - 5 Gew.-%, bezogen auf das Gewicht der Zusammensetzung, beträgt.

8. Zusammensetzung gemäss einem der vorhergehenden Ansprüche, **dadurch gekennzeichnet, dass** der Gewichtsanteil an Organo-Titanverbindung 0.5 - 15 Gew.-%, insbesondere 1 - 12 Gew.-%, bevorzugt 2 - 10 Gew.-%, bezogen auf das Gewicht der Zusammensetzung, beträgt.

9. Zusammensetzung gemäss einem der vorhergehenden Ansprüche, **dadurch gekennzeichnet, dass** die Zusammensetzung weiterhin mindestens ein Lösungsmittel, insbesondere Kohlenwasserstoffe oder Ketone oder Carbonsäureester oder Alkohole, insbesondere in einer Menge von 40 - 99 Gew.-%, bevorzugt von 60 - 95 Gew.-%, bezogen auf das Gewicht der Zusammensetzung, enthält.

10. Zusammensetzung gemäss einem der vorhergehenden Ansprüche, **dadurch gekennzeichnet, dass** die Zusammensetzung zusätzlich mindestens ein Epoxidharz, insbesondere in einer Menge von 1 - 40 Gew.-%, bevorzugt von 2 - 10 Gew.-%, bezogen auf das Gewicht der Zusammensetzung, enthält.

11. Zusammensetzung gemäss Anspruch 10, **dadurch gekennzeichnet, dass** das Epoxidharz ein Epoxid-Equivalenzgewicht (EEW) von 300 g/eq - 2000 g/eq, insbesondere 400 g/eq - 1000 g/eq, aufweist.

12. Zusammensetzung gemäss einem der vorhergehenden Ansprüche, **dadurch gekennzeichnet, dass** das molare Verhältnis aller in der Zusammensetzung eingesetzten Mercaptosilane **MS** zu allen in der Zusammensetzung eingesetzten Polysilane **PS** zu allen in der Zusammensetzung eingesetzten aromatischen sekundären Aminosilane **AS** zu allen in der Zusammensetzung eingesetzten Organo-Titanverbindungen von 1 zu 0.05 - 1.5 zu 0.05 - 1.5 zu 0.1 - 3, insbesondere von 1 zu 0.1 - 1.2 zu 0.1 - 1.2 zu 0.1 - 1.5, beträgt.

13. Verwendung einer Zusammensetzung gemäss einem der Ansprüche 1 bis 12 als Haftvoranstrich für ein Substrat **S1**.

14. Verwendung gemäss Anspruch 13, **dadurch gekennzeichnet, dass** das Substrat **S1** Glas oder Glaskeramik ist.

15. Verfahren zum Verkleben oder zum Abdichten von zwei Substraten **S1** und **S2,** welches mindestens die folgenden Schritte aufweist
a) Applizieren einer Zusammensetzung, gemäss einem der Ansprüche 1 bis 12, auf ein erstes Substrat **S1**;
b) Applizieren eines Klebstoffs oder Dichtstoffs auf die abgelüftete nach Schritt a) applizierte Zusammensetzung;
c) Kontaktieren des Klebstoffs oder Dichtstoffs mit einem zweiten Substrat **S2**;
oder
a') Applizieren einer Zusammensetzung, gemäss einem der Ansprüche 1 bis 12, auf ein erstes Substrat **S1**;
b') Applikation eines Klebstoffs oder Dichtstoffs auf die Oberfläche eines zweiten Substrates **S2**;
c') Kontaktieren des Klebstoffs oder Dichtstoffs mit der abgelüfteten Zusammensetzung, welche sich auf dem Substrat **S1** befindet;
oder
a") Applizieren einer Zusammensetzung, gemäss einem der Ansprüche 1 bis 12, auf ein erstes Substrat **S1**;
b") Applizieren eines Klebstoffs oder Dichtstoffs auf das erste Substrat **S1** und zweite Substrat **S2,** auf welche zumindest eines davon nach Schritt a") eine Zusammensetzung appliziert worden ist;
c") Kontaktieren der applizierten Klebstoffe oder Dichtstoffe miteinander unter Fügen der Substratteile zu einem Klebverbund oder Dichtverbund;
oder
a''') Applizieren einer Zusammensetzung, gemäss einem der Ansprüche 1 bis 12, auf ein erstes Substrat **S1**;
b''') Ablüften der Zusammensetzung;
c''') Applikation eines Klebstoffs oder Dichtstoffs zwischen die Oberflächen des Substrates **S1** und **S2**;
wobei das zweite Substrat **S2** aus demselben oder unterschiedlichem Material wie das Substrat **S1** besteht.

16. Verfahren gemäss Anspruch 15, **dadurch gekennzeichnet, dass** mindestens eines der Substrate **S1** oder **S2** Glas oder Glaskeramik ist.

17. Verfahren gemäss Anspruch 15, **dadurch gekennzeichnet, dass** das Substrat **S1**, respektive **S2,** Glas oder Glaskeramik ist und dass das Substrat **S2,** respektive **S1**, ein Lack oder ein lackiertes Metall oder eine lackierte Metalllegierung ist.

18. Artikel zu dessen Herstellung ein Verfahren gemäss einem der Ansprüche 15 bis 17 durchgeführt wird.

19. Artikel gemäss Anspruch 18, **dadurch gekennzeichnet, dass** der Artikel ein Transportmittel, insbesondere ein Automobil, Bus, Lastkraftwagen, Schienenfahrzeug, ein Schiff oder ein Luftfahrzeug ist.
